# EUROPEAN PATENT APPLICATION

(11) **EP 3 016 354 A1**
(43) Date of publication of application: **04.05.2016**
(21) Application number: 15780754.6
(22) Date of filing: 23.03.2015
(51) Int. Cl.: H04L 29/08

(54) **CLOUD-SERVICE-BASED DATA BACKUP AND OPERATION METHOD**

(30) Priority: 24.07.2014 CN 201410357043
(71) Applicant: Shenzhen Tinno Wireless Technology Co., Ltd, Guangdong 518053 (CN); Jiangsu Tinno Electronics Technology Co. Ltd., Nanjing, Jiangsu 210000 (CN)
(72) Inventor: JING, Hua, Shenzhen Guangdong 518053 (CN); XIANG, Hao, Shenzhen Guangdong 518053 (CN)
(74) Representative: Michalski Hüttermann & Partner Patentanwälte mbB
(86) International application number: PCT/CN2015/074866
(87) International publication number: WO 2016/011825

(57) **Abstract**

A cloud-based data backup and operation method is provided. The method includes obtaining system version information of an operating system used on a mobile terminal; based on the system version information of the operating system on the mobile terminal, creating a mirror system same as the operating system used on the mobile terminal on a virtual server in a cloud; and synchronizing data of the mobile terminal itself to the mirror system on the virtual server to form backup data. In this way, the present invention can automatically back up all of data of the mobile terminal itself and directly operate the backup data by creating an operation interface same as the operating system used on the mobile terminal on a virtual server in a cloud. This results in simple operation and lower costs.

## Description

### CROSS-REFERENCES TO RELATED APPLICATIONS

This application is a continuation application of PCT Patent Application No. PCT/CN2015/074866, filed on March 23, 2015, which claims priority of Chinese Application No. 201410357043.5, filed on July 24, 2014, the entire contents of all of which are hereby incorporated by reference.

### FIELD OF THE INVENTION

The present disclosure generally relates to the field of cloud computing technologies and, more particularly, relates to methods for cloud based data backup and operations.

### BACKGROUND

With the rapid development of mobile Internet technologies, users' focus has shifted from high-end hardware configuration of mobile terminals, such as smart phones, towards high-quality services provided to the users. Among those services, being able to access and operate their mobile terminals from anywhere at any time is becoming the most pressing requirement from the user. To meet this requirement, cloud-service-technology-based cloud storage backup, cloud virtualization, and cloud data manipulation capabilities have become indispensable.

The cloud service technology is capable of back upping the data of mobile terminals into the cloud and so the cloud processes the backup data instead of mobile terminals. There are three ways for data backup and operation: a first way to install a third party software, such as 360 mobile assistant, SnapPea and the like, to utilize backup functions so as to synchronize the data of mobile terminals onto PC (Personal Computer) and then synchronize the data of PC onto the cloud; a second way to install a third party software, such as Baidu cloud disk, Tencent cloud and the like, to utilize backup functions so as to directly synchronize the data of mobile terminals onto the cloud; a third way to install Android Development Tools insert based on Eclipse and simulate systems of mobile terminals by a Virtual Device provided the insert, and then perform data backup and operation by means of web sites.

However, the firs way needs PC to transfer data and thus its operation is comples. The second way is limited by the system authority so that it cannot back up all of data of mobile terminals, for example, installed applications. In addition, the second way cannot directly operate backup data either, but needs to be provided by relative background applications, resulting in a great limitation. The third way requires web sites to back up and operate the data, thereby increasing costs for developing relative web sites.

### BRIEF SUMMARY OF THE DISCLOSURE

The present invention intends to solve the above technical problem by providing a cloud service-based data backup and operation method. The method can automatically back up all of data of the mobile terminal itself and directly operate the backup data. This results in simple operation and lower costs.

One aspect of the present disclosure includes a data backup and operation method. The method includes obtaining system version information of an operating system used on a mobile terminal; based on the system version information of the operating system on the mobile terminal, creating a mirror system same as the operating system used on the mobile terminal on a virtual server in a cloud; and synchronizing data of the mobile terminal itself to the mirror system on the virtual server to form backup data.

The data backup and operation method further includes synchronizing the backup data on the mirroring system back to the mobile terminal.

Synchronizing the backup data on the mirroring system back to the mobile terminal further includes operating on the backup data through the mirroring system and synchronizing the operated backup data back to the mobile terminal after the operation.

obtaining system version information of an operating system used on a mobile terminal further includes connecting the mobile terminal to a computer by a data cable, obtaining the system version information by using a client program on the computer and transmitting the system version information to the cloud.

synchronizing data of the mobile terminal itself to the mirror system on the virtual server to form backup data further includes obtaining system root privilege using the client program on the computer, obtaining the data of the mobile terminal itself under the system root privilege and synchronizing data of the mobile terminal itself to the mirror system.

The data of the mobile terminal itself includes at least one of temporary data generated by file downloading, temporary data generated by installed applications, and temporary data generated by running the installed applications.

The data of the mobile terminal itself includes at least one of user data userdata.img and memory card data sdcard.

Synchronizing data of the mobile terminal itself to the mirror system further includes selectively synchronizing data of the mobile terminal itself to the mirror system on the virtual server based on user selection.

The operating system on the mobile terminal and an operating system on the mirror system are both Android operating sytsem.

The cloud cloud uses OpenStack technology to create the mirror system.

Other aspects of the present disclosure can be understood by those skilled in the art in light of the description, the claims, and the drawings of the present disclosure.

### BRIEF DESCRIPTION OF THE DRAWINGS

The following drawings are merely examples for illustrative purposes according to various disclosed embodiments and are not intended to limit the scope of the present disclosure.
Figure 1 illustrates a flow chart of an exemplary cloud-based data backup and operation process consistent with the disclosed embodiments; and
Figure 2 illustrates a configuration view of a mirror system of an Open Stack-based virtual machine according to a preferable embodiment of the present invention.

### DETAILED DESCRIPTION

To more clearly describe the purposes, technical solutions, and technical effect of the present invention, reference will now be made in detail to exemplary embodiments of the disclosure, which are illustrated in the accompanying drawings. Wherever possible, the same reference numbers will be used throughout the drawings to refer to the same or like parts. The described embodiments are merely exemplary embodiments of the present invention, and not all embodiments. Based on the disclosed embodiments of the present invention, other embodiments obtained by those of ordinary skill in the art without creative work are within the scope of the present invention.

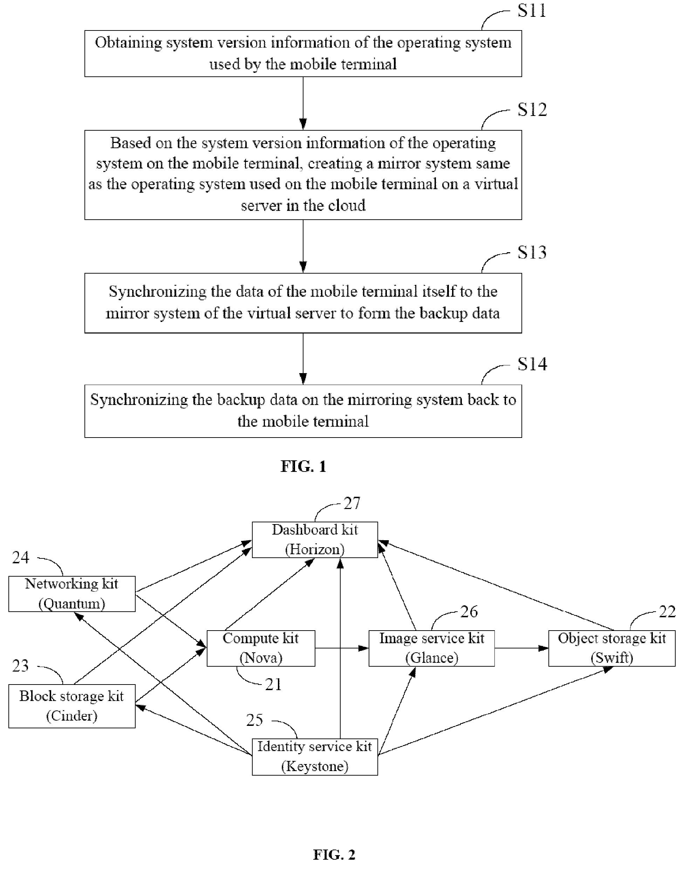

Figure 1 illustrates a flow chart of an exemplary data backup and operation process consistent with the disclosed embodiments. As shown in Figure 1, the data backup and operation process may include the following steps.

Step S11: obtaining system version information of the operating system used by the mobile terminal.

The system version information of the operating system used by the mobile terminal may be obtained by any appropriate method. In certain embodiments, the mobile terminal may be connected to a computer by a universal serial bus (USB) cable between the mobile terminal and the computer, and an application program on the computer may then obtain the system version information of the operating system used by the mobile terminal. After the system version of the operating system on the mobile terminal is obtained, the system version information is transmitted to the cloud server.

By using the computer to obtain and transmit the system version of the operating system used by the mobile terminal, the large data transmission capacity of the USB data cable can be relied on for fast and reliable data transmission. Further, high-speed data synchronization and backup can be subsequently performed on the data on the mobile terminal itself.

Alternatively, when the mobile terminal is connected to a wireless network, such as a 4^{th} generation (4G) cellular phone network, a client program on the mobile terminal may obtain the system version information directly from the mobile terminal itself, and using the high-speed data transmission capacity of the 4G cellular network to transmit the system version information of the operating system used by the mobile terminal to the cloud server, and to subsequently perform high-speed data backup on the data of the mobile terminal itself.

The computer described herein is PC (Personal Computer) as an example. However, the present invention is not limited by this, and the computer may be any terminal equipment having storing and computing functions, including notebook, PDA (Personal Digital Assistant) and the like. Further, mobile terminals mentioned through the specification is a smart phone as an example, of course it is not exclusive.

Step S12: based on the system version information of the operating system on the mobile terminal, creating a mirror system same as the operating system used on the mobile terminal on a virtual server in the cloud.

More specifically, OpenStack (an open-source cloud platform software) technology may be used to build the virtual server in the cloud, i.e., to build a virtual cloud system. Figure 2 illustrates an exemplary virtual server consistent with the disclosed embodiments.

As shown in Figure 2, the virtual server created by the OpenStack-based technology may include seven different functional components or software kits/modules. More specifically, the virtual server may include a compute kit (called Nova) 21, an object storage kit (called Swift) 22, a block storage kit (called Cinder) 23, a networking kit (called Quantum) 24, an identity service kit (called Keystone) 25, an image service kit (called Glance) 26, and a dashboard kit (called Horizon) 27. Certain kits may be omitted and other kits may also be included.

Among these kits, the dashboard kit 27 may provide operation interfaces for the compute kit 21, the object storage kit 22, the block storage kit 23, the networking kit 24, and the image service 26. The identity service kit 25 may provide identification and authentication functions for the object storage kit 22, the block storage kit 23, the networking kit 24, the identity service kit 25, the image service kit 26, and the dashboard kit 27. The networking kit 24 may provide network connectivity to the compute kit 21, and the block storage kit 23 may provide storage capacity for the compute kit 21.

In certain embodiments, the compute kit 21 may be used to provide functions of creating and managing the virtual server. The user can use API (application programming interface) to develop cloud applications, and check and manage the operating conditions of data backup through a web-based interface. Similarly, the user can restart, pause, and adjust the data operation of the virtual server, or even directly shut down the virtual server.

The object storage kit 22 may be used to store the hardware data stored by the image service kit 26, and to provide a scalable distributed storage platform, in order to prevent a single point of failure from occurring. The Users can use its API to store unstructured data, such as images, web pages, blogs and other types of data, and for data backup of application programs.

The block storage kit 23 may be used to integrate the compute kit 21 and to provide snapshot management capabilities, which can allow the user to view the status of the capacity usage of the storage devices. The block storage kit 23 may also be used to protect backup data on the virtual server, and to create new block storages through the snapshot management function.

The networking kit 24 may be configured to be scalable, and plug and play. The networking kit 24 may be used to manage network infrastructure system through its API and to configure the IP addresses of the network, so as to ensure that, when the user deploys cloud services, the network services do not become a bottleneck or cause any failure for deploying the virtual server.

The identity kit 25 may be used to provide a central directory as well as a variety of authentication formats to verify the user's identity and to check services accessible to that identity.

The image service kit 26 may be used to store backup data obtained by the compute kit 21, and to provide functions of the virtual server, such as image file searching, registration, and service delivery, such that the stored image files can be the new template required to deploy the new virtual server, or can be the backup data.

The dashboard kit 27 may be used to provide the user with a graphical user interface, so that the user can view the current state of the virtual server, and can also operate on the backup data through the user interface.

As to the operating system of the mobile terminal, any appropriate operating system may be used. In certain embodiments, the operating system used by the mobile terminal and the operating system in the mirror system on the virtual server in the cloud are the same, both being the Android operating system.

Step S13: synchronizing the data of the mobile terminal itself to the mirror system of the virtual server to form the backup data.

More specifically, the data of the mobile terminal itself includes at least one of the userdata.img (user data) and sdcard data (memory card, storage device, etc.), and at least one of temporary data generated by file downloading, temporary data generated by installed applications, and temporary data generated by running the applications, etc.

In certain embodiments, the client program on the computer connected to the mobile terminal may obtain the root privilege of the operating system of the mobile terminal, and may obtain the data of the mobile terminal itself under the system root privilege, and may further synchronize the data of the mobile terminal itself to the mirror system on the virtual server. Alternatively, when the mobile terminal has access to the 4G cellular network, the client program on the mobile terminal may directly obtain the root privilege of the operating system of the mobile terminal, and may obtain the data of the mobile terminal itself under the system root privilege, and further synchronize the data of the mobile terminal itself to the mirror system on the virtual server.

The system root privilege may refer to the highest authority of the operating system used by the mobile terminal. After obtaining the system root privilege, the user can perform any operation, such as add, delete, modify, query, and synchronize, on any file in the mobile terminal.

Further, through a selection interface, the user may selectively synchronize the data of the mobile terminal itself to the mirror system. For example, the user can select only the data from the sdcard or the downloaded files to be synchronized to the mirror system in the cloud to form the backup data, while other data of the mobile terminal itself is not synchronized.

Step S14: synchronizing the backup data on the mirroring system back to the mobile terminal.

The user can synchronize the backup data that has never be operated on the mirror system back to the mobile terminal, on achieving the data backup function of the mobile terminal. Optionally, the user can synchronize the backup data that has been operated on the mirror system back to the mobile terminal. That is, the user can perform operations on the backup data through the mirror system, and then synchronize the backup data after operations back to the mobile terminal.

Thus, after the completion of step S13, a mirror system completely identical to the operating system on the mobile terminal can be created in the cloud, and the system data can be synchronized according to the user's needs, so that operating system interfaces identical to those of the mobile terminal can be generated in the cloud. That is, there is no difference between operating the operating system interfaces in the cloud and operating the operating system interfaces on the mobile terminal, and the user can perform certain operations on the virtual server in the cloud that are inconvenient to be performed on the mobile terminal, such as batch delete.

In addition, when it is inconvenient or impossible to start the mobile terminal, such as when the mobile terminal is being charged or is left at home by the user, the user can use the backup data for certain operation, such as playing games. Further, the user can install on the virtual server an application program that has not been installed on the mobile terminal, and can run the installed application program on the virtual server. When the user satisfies with the results from the running the application program on the virtual server, the user can then synchronize the application program to the mobile terminal. When the user does not satisfy with the results from the running the application program on the virtual server, the user can delete the installed application program directly on the virtual server without synchronizing the application program to the mobile terminal, avoiding producing system garbage on the mobile terminal.

Thus, according to the disclosed embodiments, a mirror operating system identical to the operating system on the mobile terminal can be created on a virtual server in the cloud, i.e., to create on the virtual server operating system interfaces identical to those of the operating system on the mobile terminal. Thus, backup operation can be performed on the data of the mobile terminal itself, including application programs, and the user does not need any third-party software for manual backup operations. In addition, the user can directly operate on the backup data through the operating system interfaces of the mirror system, without nay third-party software or web sites, simplifying the operations and reducing the cost. Further, the user can synchronize the operations on the backup data by the virtual server to the mobile terminal, facilitating the preservation, operation and storage of the backup data by the mobile terminal after virtual server operations.

The disclosed embodiments are for illustrative purposes and do not intend to limit the scope of the present invention. Other applications, advantages, alternations, modifications, or equivalents to the disclosed embodiments are obvious to those skilled in the art. Any equivalent structures or equivalent process transformation using the contents of the specification and drawings, such as combinations of features from different embodiments or directly or indirectly being used in related technology fields, are within the scope of the present invention.

## Claims

1. A data backup and operation method, comprising:
obtaining system version information of an operating system used on a mobile terminal;
based on the system version information of the operating system on the mobile terminal, creating a mirror system same as the operating system used on the mobile terminal on a virtual server in a cloud; and
synchronizing data of the mobile terminal itself to the mirror system on the virtual server to form backup data.

2. The method according to claim 1, further comprising:
synchronizing the backup data on the mirroring system back to the mobile terminal.

3. The method according to claim 2, wherein synchronizing the backup data on the mirroring system back to the mobile terminal further includes:
operating on the backup data through the mirroring system; and
synchronizing the operated backup data back to the mobile terminal after the operation.

4. The method according to claim 1, wherein obtaining system version information of an operating system used on a mobile terminal further includes:
connecting the mobile terminal to a computer by a data cable;
obtaining the system version information by using a client program on the computer; and
transmitting the system version information to the cloud.

5. The method according to claim 4, wherein synchronizing data of the mobile terminal itself to the mirror system on the virtual server to form backup data further includes:
obtaining system root privilege using the client program on the computer;
obtaining the data of the mobile terminal itself under the system root privilege; and
synchronizing data of the mobile terminal itself to the mirror system.

6. The method according to claim 1, wherein the data of the mobile terminal itself includes at least one of temporary data generated by file downloading, temporary data generated by installed applications, and temporary data generated by running the installed applications.

7. The method according to claim 1, wherein the data of the mobile terminal itself includes at least one of user data userdata.img and memory card data sdcard.

8. The method according to claim 7, wherein synchronizing data of the mobile terminal itself to the mirror system further includes:
based on user selection, selectively synchronizing data of the mobile terminal itself to the mirror system on the virtual server.

9. The method according to claim 1, wherein the operating system on the mobile terminal and an operating system on the mirror system are both Android operating sytsem.

10. The method according to claim 1, wherein the cloud cloud uses OpenStack technology to create the mirror system.
